# EUROPÄISCHE PATENTSCHRIFT

(11) **EP 1 398 017 B1**
(45) Veröffentlichungstag und Bekanntmachung des Hinweises auf die Patenterteilung: **09.08.2006**
(21) Anmeldenummer: 03450198.1
(22) Anmeldetag: 04.09.2003
(51) Int. Cl.: A61H 33/00, A01K 63/04

(54) **Behandlungswanne**
Therapy tank
Cuve thérapeutique

(30) Priorität: 12.09.2002 AT 13702002
(43) Veröffentlichungstag der Anmeldung: 17.03.2004
(73) Patentinhaber: Gularas, Thomas, 2802 Hochwolkersdorf (AT)
(72) Erfinder: Gularas, Thomas, 2802 Hochwolkersdorf (AT)
(74) Vertreter: Beer, Manfred

(56) Entgegenhaltungen:
- DE-A- 2 127 234
- DE-U- 29 809 105
- GB-A- 498 156
- US-A- 3 971 338
- PATENT ABSTRACTS OF JAPAN vol. 2002, no. 08, 5. August 2002 (2002-08-05) & JP 2002 119557 A (YOSHIDA KATSUMI), 23. April 2002 (2002-04-23)

## Beschreibung

Die Erfindung betrifft eine Wanne mit den Merkmalen des einleitenden Teils von Anspruch 1.

Bekannt ist es, daß durch eine Behandlung mit sogenannten "Knabberfischen" (Garra Rufa oder Rote Saugbarbe) bei bestimmten Hautkrankheiten, insbesondere bei Psoriasis, Neurodermitis, Ekzemen, wenigstens Linderung dadurch herbeigeführt werden kann, daß die zur Behandlung eingesetzten Fische die Haut des Patienten "abknabbern".

Bekannt sind ebenfalls Wasseraufbereitungsanlagen für Aquarien, um für die darin aufgenommenen Lebewesen eine konstante Wasserqualität zu gewährleisten. Die US 3 971 338 A zeigt ein selbsterhaltendes Aquariumssystem mit einer Einrichtung, über welche Wasser aus den Becken abgezogen und über im Kreislauf eine Pumpe wieder in das Becken rückgeführt werden kann. Nachteilig bei diesem System ist jedoch, dass besondere hygienische Anforderungen hinsichtlich einer medizinischen bzw. therapeutischen Behandlung von Menschen mit Fischen der Gattung Garra Rufa nicht erfüllt werden können, da dies eine erhöhte Schwebstoffbelastung und einen zusätzlichen Wasseraustausch bedingt.

Die DE 21 27 234 A offenbart ein Fischhälterungsbecken gemäß des Oberbegriffs des Anspruchs 1 mit einer Vorrichtung zum Regeln des Wasserwechsels mit einem Filter, wobei das Wasser im Kreislauf umgewälzt wird. Bei dieser Vorrichtung ist ein zeituhrgesteuertes Wasserablassventil zwischen einem Schmutzabsetzraum im Bodenstück eines Filterkörperbehälters vor dem Filter und dem Ablauf vorgesehen. Die bekannte Vorrichtung besitzt weiters ein Schaltgerät mit Schaltuhr, einen Hauptabsperr- und Hauptablasshahn, ein elektromagnetisch betätigtes Wasserablassventil, eine Pumpe für den Wasserkreislauf und einen Elektromotor für den Antrieb derselben. Dabei soll gemäß der DE 21 27 234 A im Becken befindlicher Schmutz aus einem Trichter zu einem Filtereinlaufstutzen und einem Grobschmutzabsetzraum führen. Durch Absetzen grob vorgereinigtes Wasser wird durch das Filter in das Becken zurückgepumpt.

Aufgabe der Erfindung ist es, eine Wanne der eingangs genannten Gattung anzugeben, die zur langfristigen, permanenten Nutzung im Zusammenhang mit der Knabberfisch-Behandlung verwendet werden kann.

Gelöst wird diese Aufgabe erfindungsgemäß durch eine Wanne, welche die Merkmale von Anspruch 1 aufweist.

Bevorzugte und vorteilhafte Ausgestaltungen der erfindungsgemäßen Wanne sind Gegenstand der Unteransprüche.

Durch die Ausgestaltung der erfindungsgemäßen Wanne wird sichergestellt, daß für die Fische (Garra Rufa oder Rote Saugbarbe), die zur Familie der Karpfenfische gehören und vor allem in der Türkei bei dem Ort Kangal vorkommen (daher auch der Name Kangal-Fisch), stabile und optimale Lebensbedingungen geschaffen werden.

Mit der Erfindung ist auch sichergestellt, daß eine hygienisch einwandfreie, möglichst komfortable Nutzung der Wanne durch die zu behandelnden Menschen beim Anwenden der Knabberfisch-Behandlung gewährleistet ist.

Weiters ist bei der erfindungsgemäßen Wanne in einer Ausführungsform dafür gesorgt, daß ein laufender, störungsfreier Betrieb gesichert ist und die notwendigen Reinigungs-, Wartungs- und Servicearbeiten einfach und rasch ausgeführt werden können.

Die erfindungsgemäße Wanne kann als Kunststoffwanne mit einem Fassungsvermögen von beispielsweise 700 oder 1100 l ausgeführt sein.

Vorteilhaft ist es, wenn die Oberfläche der Wanne durch eine Wasserdampfbehandlung bearbeitet worden ist, so daß sie lebensmittelrechtlichen Vorschriften entspricht und physiologisch einwandfrei ist.

In einer Ausführungsform der erfindungsgemäßen Wanne ist diese mit einem perforierten und für die Sicherheit der Benutzer der erfindungsgemäßen Wanne rutschfesten Zwischenboden ausgestattet. Dieser kann aus eloxiertem Aluminium (Farbe z.B. "C34") oder aus mit Kunststoff (z.B. im Pulverbeschichtungsverfahren) beschichtetem Aluminium (Farbe z.B. RAL 8017) bestehen. Wenn dieser Zwischenboden in brauner Farbe ausgeführt ist, ergibt sich der Vorteil, daß durch den Braunton einstrahlendes Licht vorwiegend absorbiert und nicht reflektiert wird, und sich die für die Knabberfisch-Behandlung eingesetzten Fische wohler fühlen und besser "arbeiten".

In einer Ausführungsform der erfindungsgemäßen Wanne ist unterhalb des gegebenenfalls vorgesehenen gelochten Zwischenbodens ein Bodenabfluss vorgesehen. Dieser Bodenabfluß kann einmal dazu genutzt werden, im laufenden Betrieb Wasser aus der Wanne abzuziehen, über wenigstens ein Filter zu führen und nach erfolgter Reinigung und/oder Entkeimung der Wanne wieder zuzuführen. Alternativ kann die Wanne über den Bodenabfluß (zwei-Wege-Ablauf) rasch und vollständig entleert werden.

Die optimale und maximale Füllmenge der Wanne kann in einer Ausführungsform durch einen im oberen Bereich der Wanne angeordneten Überlauf geregelt werden.

Für die Person, die sich der Knabberfisch-Behandlung unterzieht, kann in der Wanne ein höhenverstellbarer Sitz, vorzugsweise aus Edelstahl, vorgesehen sein, wobei bevorzugt ist, wenn die Sitzfläche mit braunem Kunststoff verkleidet oder beschichtet ist. Durch diesen verstellbaren Sitz ist es Wannenbenutzern möglich, die für ihre Bedürfnisse und/oder für die optimale Behandlung notwendige Stellung einzunehmen.

Um das Ein- und Aussteigen aus der Wanne zu erleichtern, kann eine, beispielsweise aus Edelstahl hergestellte und mit Haltestangen versehene, Einstiegstreppe oder Leiter vorgesehen sein. Vorzugsweise steht diese Treppe auf Edelstahlgelenkfüßen und ist über Sicherungsschrauben zusätzlich fixiert und verankert. Die Trittflächen der Treppe sind bevorzugt rutschsicher ausgeführt.

Die eigentliche Wanne und der noch zu erörternde "Technikschacht" können z.B. mit wasserfesten Spanplatten, verkleidet sein.

Die erfindungsgemäße Wanne kann mit Leitungswasser gefüllt werden, das beispielsweise durch ein Behandlungsverfahren, z.B. die Grander-Methode, belebt und aufbereitet worden ist.

Vorzugsweise wird dem in der Wanne enthaltenen Wasser etwas Meeressalz zugesetzt (beispielsweise 0,1 g/l).

Eine darüber hinausgehende Behandlung des in der Wanne enthaltenen Wassers ist nicht notwendig.

Die für den Betrieb der Wanne erforderlichen Apparaturen und Einrichtungen können in einem, beispielsweise an der Schmalseite der Wanne angeordneten Raum, dem "Technikschacht" untergebracht sein. In diesem Schacht können alle Bauteile und Steuerungselemente untergebracht sein, die vorzugsweise selbsttätig für eine permanent optimale Qualität und Temperatur des Wassers in der Wanne sorgen.

In einer Ausführungsform sind an der Außenseite des Technikschachtes, insbesondere einer Verkleidung desselben ausschließlich die Anschlüsse für Warmwasser, Kaltwasser, Strom und das Abflußrohr vorgesehen. Dies erlaubt ein einfaches Aufstellen und Inbetriebnehmen der Wanne am jeweiligen Einsatzort. Erforderlich ist lediglich, daß die entsprechenden Versorgungsleitungen für Strom und Wasser sowie Abwasserleitungen vorhanden sind, wobei die Versorgungsleitungen für Wasser um die "Grander-Technik" und gegebenenfalls um ein Dosiergerät für die Zugabe von Meeressalz erweitert werden können.

Um die Temperatur des Wassers in der Wanne auf dem gewünschten Wert zu halten, kann eine Temperaturregelung vorgesehen sein. Dabei ist vorzugsweise die Ausführung so gewählt, daß das Wasser in der Wanne eine Temperatur zwischen 36,0 und 36,7°C hat, wobei aus Gründen der Sicherheit (für Mensch und Fisch) ab einer Temperatur von 38° C das Heizen des Wassers in der Wanne - was beispielsweise durch Zuführen von erwärmtem Frischwasser erfolgen kann - zwangsweise unterbrochen wird, indem das Zuführen von erwärmtem Wasser abgebrochen wird.

Es hat sich bewährt, wenn die bei der Knabberfisch-Behandlung eingesetzten Fische stufenweise an die gegenüber den Zuchtwannen (25 bis 26°C) höhere Wassertemperatur in der Wanne gewöhnt werden. Die höhere Temperatur des Wassers in der erfindungsgemäßen Wanne hat den Vorteil, daß sie den Stoffwechsel der Fische anregt, wodurch sie agiler und damit "knabberfreudig" werden. Die Temperatur 36,0 bis 36,7°C wird auch von den zu behandelnden Personen als angenehm empfunden, da sie in der Nähe der normalen Körpertemperatur von Menschen liegt.

Mit Vorteil wird der Temperaturfühler der Temperaturregelungseinrichtung im Bereich des Ablaufes im Boden der Wanne angeordnet (dort ist das Wasser am kühlsten), so daß schon bei geringer Abweichung der Temperatur vom gewünschten Wert entsprechende Maßnahmen die gewünschte Temperatur wieder zu erreichen, getroffen werden können. Um die Temperatur auf den gewünschten Wert zu halten, kann beim Absinken der Temperatur auf einen Wert unter den gewünschten Temperatur-Bereich Warmwasser, insbesondere erwärmtes Frischwasser, zugeführt werden, wozu im Zulauf ein Magnetventil geöffnet werden kann. Vorzugsweise wird durch eine Mischarmatur das zuströmende (Frisch-)Wasser auf eine Temperatur von 45 bis 58°C eingestellt, bevor es in die Wanne einströmt.

In einer Ausführungsform kann vorgesehen sein, daß eine Verbindung zwischen Frischwasserdüse (Wasserzufuhr) und Filterpumpendüse (Wasserumwälzung) vorhanden ist, wodurch bedingt durch den höheren Druck des zuströmenden Frischwassers erreicht wird, daß Frischwasser über beide Düsen in die Wanne einströmt und in der Wanne eine entsprechende Strömung entsteht, die ein rasches Vermischen von zugeführtem Wasser mit dem in der Wanne befindlichem Wasser zur Folge hat.

Von Vorteil ist es bei diesem Ausführungsbeispiel, daß bedingt durch den höheren Druck des Frischwassers auch aus der Filterpumpendüse mehr mit Luftsauerstoff angereichertes Wasser transportiert wird und das Wannenwasser durch verwirbelten Sauerstoff zusätzlich belebt werden kann.

Über die am Wassermischer manuell eingestellte Temperatur des zugeführten Wassers kann auch die Menge des in die Wanne einströmenden Frischwassers gesteuert werden. Je kühler das Frischwasser ist, umso mehr Frischwasser muß in die Wanne strömen, um die gewünschte Temperatur (wieder) zu erreichen. Beispielsweise kann eine Frischwasserzufuhr auf einen Wert von etwa 100 bis etwa 300 1/Stunde eingestellt werden.

Vorteilhaft ist es weiters, wenn das Wannenwasser permanent mit einer Leistung von etwa 700 1/Stunde über eine Filterpumpe umgewälzt wird, wobei es über die Filterpumpendüse wieder in die Wanne strömt. Dabei wird beim Umwälzen dafür gesorgt, daß das Wasser aufbereitet wird, indem z.B. Schmutz und Schwebeteilchen ausgefiltert werden.

Mit Vorteil kann auch eine zusätzliche Entkeimung des umgewälzten Wannenwassers vorgesehen sein, wozu beispielsweise nach der Umwälzpumpe/Filter eine Bestrahlung des Wassers mit Ultraviolettlicht, insbesondere mit UVC-Licht (UVC-Filter), erfolgen kann. Beispielsweise genügt es, wenn das UVC-Filter je Tag 8 bis 12 Stunden in Betrieb genommen wird, was z.B. durch eine Zeitschaltuhr gesteuert werden kann.

Zusätzlich kann eine Luftpumpe vorgesehen sein, mit der über ein Luftventil dem Wasser in der Wanne, beispielsweise im Umwälzkreislauf nach dem Filter und gegebenenfalls der Entkeimung, Frischluft und damit Sauerstoff zugeführt wird. Die Luftpumpe kann dem umgewälzten Wannenwasser Luft mit einem Druck von 3,5 bar und einer Menge von 2000 cm³/min zuführen. Mit Vorteil ist dem an die Luftpumpe angeschlossenen Luftventil ein beispielsweise von Hand aus zu betätigendes Einstellorgan, z.B. eine Stellschraube, zugeordnet, mit dem die Menge an in das Wasser in der Wanne einströmender Luft eingestellt werden kann.

Durch die Wasseraufbereitung in Kombination mit der Zufuhr von (temperiertem) Frischwasser kann erreicht werden, daß das Wasser in der Wanne je Tag 3 bis 4 mal gänzlich erneuert wird.

Die erfindungsgemäße Wanne erlaubt es durch genaues Abstimmen der Wasserqualität und Wassertemperatur, Fische über längere Zeiträume, also entsprechend der Behandlungsdauer von beispielsweise 21 Tagen in der Behandlungswanne zu halten. Auch für die zu behandelnden Personen ist ein höchstmöglicher Hygienestandard gegeben. Während der Zeit, in der die Fische in der Behandlungswanne sind und eine Knabberfisch-Behandlung ausgeführt wird, ernähren sich die Fische im wesentlichen von abgeknabberten Hautschuppen. Allenfalls fehlende Stoffe können den Fischen durch Zusatzfütterung, beispielsweise in Form von Vitamintabletten, verabreicht werden.

Weitere Einzelheiten, Vorteile und Merkmale der erfindungsgemäßen Behandlungswanne ergeben sich aus der nachstehenden Beschreibung des in den Zeichnungen schematisch dargestellten Ausführungsbeispiels.

Es zeigt:
Fig. 1 schematisch eine erfindungsgemäße Wanne in Draufsicht;
Fig. 2 stark schematisiert die Wanne in Stirnansicht;
Fig. 3 die Wanne in Seitenansicht, ebenfalls stark schematisiert; und
Fig. 4 schematisiert den Technikschacht mit darin angeordneten Einrichtungen.

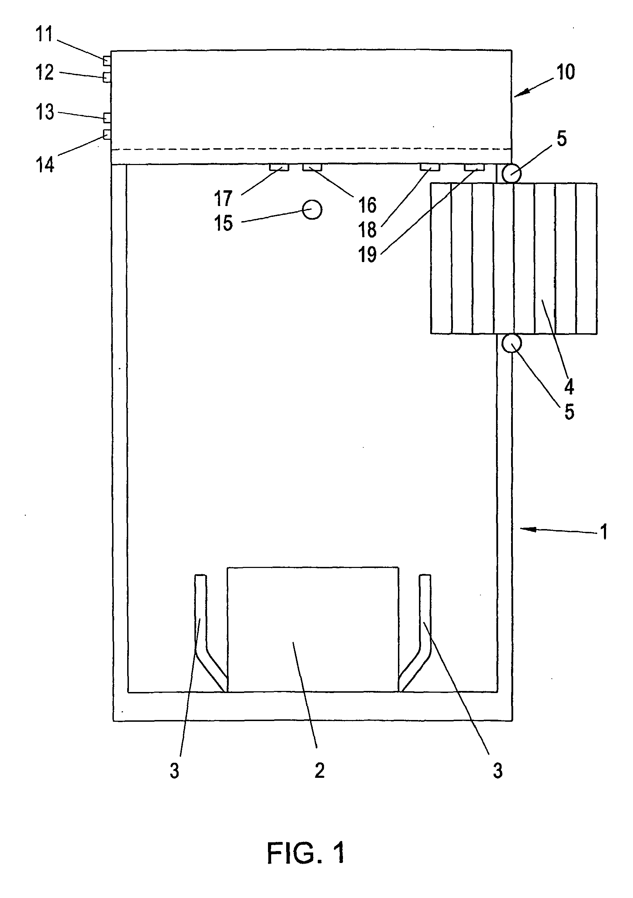

Eine in Draufsicht in Fig. 1 gezeigte Behandlungswanne 1 hat einen Boden mit Abmessungen von 190 x 110 cm und eine Höhe von 98 cm. In der Wanne 1 ist ein höhenverstellbarer Sitz 2 mit auf seinen beiden Seiten angeordneten Armstützen 3 vorgesehen.

Um das Einsteigen in die Wanne 1 zu erleichtern, ist eine Einstiegstreppe 4 vorgesehen, die beidseitig mit Haltestangen 5 versehen ist, so daß sich eine in die Wanne 1 ein- bzw. aussteigende Person anhalten kann.

An einem Schmalende der Wanne 1 ist ein Technikschacht 10 vorgesehen, wobei am Technikschacht 10 außen ein Stromanschluß 11, ein Kaltwasseranschluß 14, ein Warmwasseranschluß 13 und ein Abflußrohr 12 angeordnet sind.

Im Bereich eines Abflusses 15 aus der Wanne 1 ist (unten) ein Temperaturfühler 16 und (oben) ein Überlauf 17 vorgesehen.

Aus dem Technikschacht 10 münden in die Wanne 1 eine Düse 18, durch die umgewälztes Wasser wieder in die Wanne 1 zurückgeführt wird, und eine weitere Düse 19, durch die der Wanne 1 Frischwasser temperiert und mit geregelter Menge zugeführt werden kann.

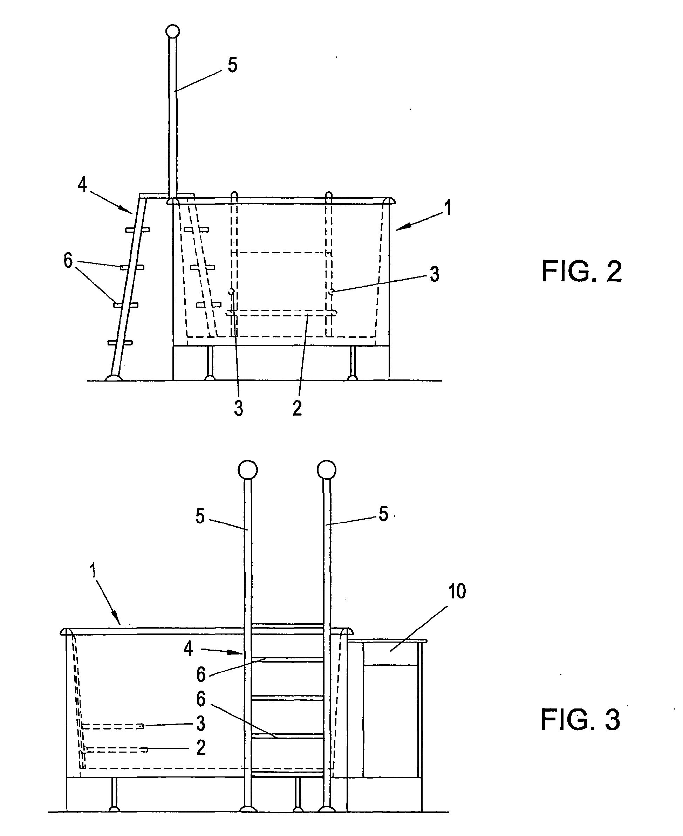

In Fig. 2 ist die Wanne 1 aus Fig. 1 in Ansicht von oben der Fig. 1 dargestellt. Zu sehen ist die Einstiegstreppe 4 mit Trittflächen 6, die rutschfest ausgebildet sind, die Haltestangen 5, sowie der höhenverstellbare Sitz 2 mit den Armstützen 3.

Fig. 3 zeigt die Wanne 1 von rechts der Fig. 1 aus gesehen wieder mit Einstiegstreppe 4 mit Haltestangen 5, mit dem Sitz 2 und den Armstützen 3, sowie mit dem neben der Wanne 1 angeordneten Technikschacht 10.

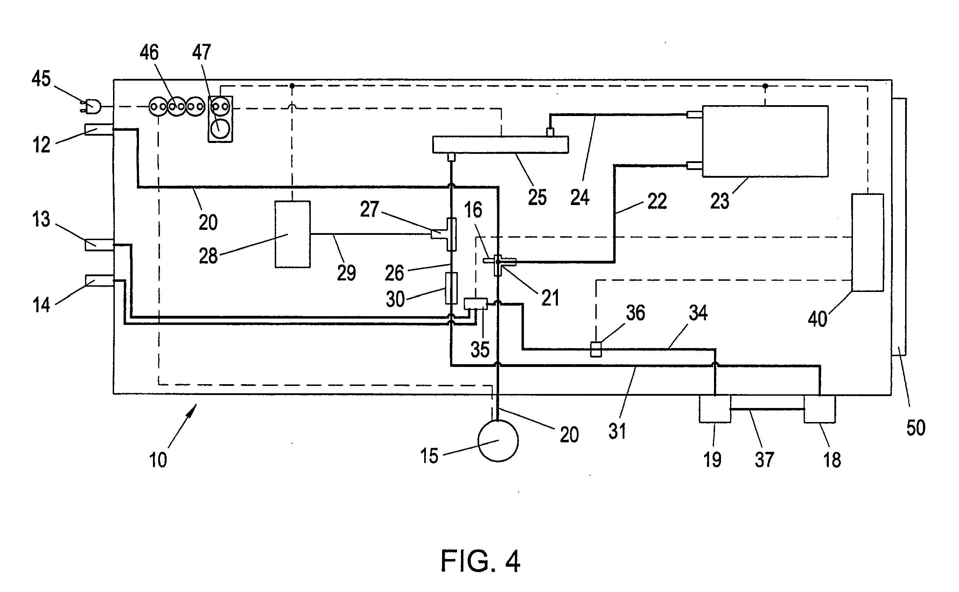

Im Technikschacht 10, ist wie in Fig. 4 gezeigt, eine Leitung 20 vorgesehen, die vom Auslaß 15 der Wanne 1 durch den Technikschacht 10 zu dem Abfluß 12 führt. In der Leitung 20 ist ein T-Stück 21 vorgesehen, von dem eine Leitung 22 ausgeht, durch die Wasser zu einer Filterpumpe 23 gefördert wird. Mit der Filterpumpe 23 wird Wasser umgewälzt. In der Filterpumpe 23 wird aus der Wanne 1 durch die den Auslass 15, 20 und die Leitung 22 abgezogenes Wasser durch Filtern von Feststoffteilchen befreit. Von der Filterpumpe 23 strömt Wasser über eine Leitung 24 zu einem Entkeimungsgerät, z.B. einem UVC-Filter 25, in dem das Wasser entkeimt wird. Der Betrieb des UVC-Filters 25 wird von einer Zeitschaltuhr 47 gesteuert. Vom UVC-Filter 25 geht eine Leitung 26 aus, in der ein Luftventil 27 vorgesehen ist, an das eine von einer Luftpumpe 28 kommende Luftleitung 29 angeschlossen ist. So wird dem vom UVC-Filter 25 kommenden Wasser Luft zugemischt, um dessen Sauerstoffgehalt zu erhöhen, bevor es über die Düse 18 wieder in die Wanne 1 einströmt. Das Luftventil 22 weist eine händisch zu bedienende Einstellschraube auf, so daß die ins Wasser einströmende Luftmenge reguliert werden kann.

Wasser strömt vom Entkeimungsgerät 25 (UVC-Filter) zu einem Absperrventil 30 und von diesem weiter über eine Leitung 31 zur Düse 18 und aus dieser wieder zurück in die Wanne 1.

Von den Anschlüssen 13 und 14 für Warm- und Kaltwasser strömt Wasser zu einem Wassermischer 35 in dem die Temperatur des abströmenden Wassers durch Festlegen des Mischungsverhältnisses Warmwasser zu Kaltwasser eingestellt wird. Wenn das in der Leitung 34 vorgesehene Magnetventil 36 geöffnet ist, strömt erwärmtes Wasser über eine Leitung 34 zur Frischwasserdüse 19 und tritt durch diese in die Wanne 1 ein.

Die Düsen 18 und 19 sind miteinander durch eine Leitung 37 verbunden, so daß das aus der Düse 19 ausströmende (temperierte) Frischwasser wie eingangs beschrieben, das Umwälzen von Wasser aus der Wanne 1 unterstützt und für eine erhöhte Luftsauerstoffzufuhr sorgt.

Das mit Hilfe des Wassermischers 35 temperierte Frischwasser strömt zum Magnetventil 36, das über den Temperaturregler 40 gesteuert wird. Der entsprechende Impuls zum Öffnen bzw. Schließen des Magnetventils kommt vom Temperaturfühler 16 im Bereich des T-Stückes 21 in der vom Abfluß 15 der Wanne kommenden Leitung 20.

Es wird jeweils soviel temperiertes Frischwasser zugeführt, wie es für das Beibehalten der richtigen Temperatur des Wassers in der Wanne 1 erforderlich ist. So hat man es auch in der Hand, zu bestimmen, in welchem Zeitraum das Wasser in der Wanne 1 durch Frischwasser ersetzt wird. Wenn die Temperatur des zugeführten Frischwassers niedriger ist, wird für das Temperieren des Wannenwassers mehr Frischwasser benötigt, also rascher ausgetauscht - und umgekehrt. Der Temperaturfühler 16 wird über eine Steuerung und Erdung mit elektrischer Energie versorgt. Der Temperaturfühler 16 ist über eine Fühlerleitung mit der Temperaturregelvorrichtung 40 verbunden.

An dem Technikschacht 10 ist als Stromanschluss 11 noch eine Stromzufuhrleitung mit Stecker 45 vorgesehen, die im Inneren des Technikschachtes 10 mit mehreren Schutzkontaktsteckdosen 46 verbunden sein kann, an welche z.B. die Pumpen 23 und 28 sowie das Steuergerät 40 angeschlossen werden können.

Um den Technikschacht 10 zugänglich zu machen, kann an einer seiner Schmalseiten eine Wartungstüre 50 vorgesehen sein.

Weiters kann in dem Technikschacht 10 auch eine Erdungsleitung vorgesehen sein, die mit metallischen Teilen der Wanne 1 verbunden ist, beispielsweise mit der Leiter 4, dem Abfluß 15, dem Sitz 2 und einer allenfalls in die Wanne 1 eingelegten, gelochten Bodenplatte aus Aluminium.

Zusammenfassend kann ein Ausführungsbeispiel der Erfindung wie folgt dargestellt werden:

In einer Wanne, in der eine Behandlung von Hautkrankheiten, wie Psoriasis, Neurodermitis oder Ekzeme durch sogenannte Knabberfische ausgeführt werden kann, ist ein Sitz 2 mit Armstützen 3 und eine Einstiegsleiter 4 vorgesehen. Neben der Wanne ist ein Technikschacht 10 angeordnet, in dem die Einrichtungen zum Umwälzen, Temperieren, Filtern und Entkeimen des Wannenwassers untergebracht sind, wobei Wasser aus der Wanne über einen Ablauf 15 abgezogen und über eine Düse 18 wieder zugeführt wird. Die Temperatur des Wassers in der Wanne wird auf dem gewünschten Wert gehalten, daß der Wanne die jeweils erforderliche Menge an temperiertem Frischwasser zugeführt wird. Das Einstellen der Temperatur des zugeführten Frischwassers erfolgt über einen Mischer, an dem ein Warmwasserzufluß angeschlossen ist. Die Menge an zugeführtem Wasser wird von einem Temperaturregler in Abhängigkeit von einem Wärmefühler über ein nach dem Wassermischer angeordnetes Magnetventil geregelt.

So ist sichergestellt, daß in der Wanne die für die Behandlung durch die Knabberfische optimalen Bedingungen herrschen und auch für die behandelnde Person verträgliche hygienische Verhältnisse vorliegen.

## Patentansprüche

1. Wanne (1) zum Behandeln von Menschen durch Fische der Gattung Garra Rufa, einschließend eine Einrichtung zum Aufbereiten des in der Wanne (1) enthaltenen Wassers, umfassend eine Filterpumpe (23), der aus der Wanne (1) abgezogenes Wasser zuführbar ist, und eine Entkeimungsvorrichtung (25)durch die Wasser nach der Filterpumpe (23) in die Wanne zurückführbar ist, und einschließend eine Einrichtung zum Austauschen des Wassers in der Wanne (1), umfassend Einrichtungen (12,15,20) zum Abführen des Wassers aus der Wanne (1) und Einrichtungen (13,14,18) zum Zuführen von temperiertem Frischwasser in die Wanne (1), wobei die Einrichtung (13, 14, 18) zum Zuführen von temperiertem Frishwasser in die Wanne (1) ein Magnetventil umfasst, **gekennzeichnet dadurch, dass** eine Frischwasserzufuhr durch eine Einrichtung (16,35,36,40) zum Konstanthalten der Temperatur des Wassers steuerbar ist, und **dass** die Einrichtung (13, 14, 18) zum Zuführen von temperiertem Frischwasser in die Wanne (1) einen einstellbaren Wassermischer (35), dem bei Gebrauch Kalt- und Warmwasser (13,14) zugeführt wird umfasst.

2. Vorrichtung nach Anspruch 1, **dadurch gekennzeichnet, daß** eine Einrichtung zum Entkeimen von Wasser eine mit Ultraviolettstrahlen arbeitende Vorrichtung (25) ist, deren Betrieb durch eine Zeitschaltuhr (47) steuerbar ist.

3. Vorrichtung nach Anspruch 2, **dadurch gekennzeichnet, daß** die mit Ultraviolettstrahlen arbeitende Vorrichtung ein UVC-Filter (25) ist.

4. Vorrichtung nach einem der Ansprüche 1 bis 3, **dadurch gekennzeichnet, daß** ein einstellbares Luftventil (27) vorgesehen ist, mit welchem dem der Wanne (1) zurückgeführten Wasser Luft (27, 28, 29) zumischbar ist.

5. Vorrichtung nach Anspruch 1, **dadurch gekennzeichnet, daß** der Wanne (1) temperiertes Frischwasser über eine Düse (19) zuführbar ist.

6. Vorrichtung nach Anspruch 5, **dadurch gekennzeichnet, daß** die Düse (19) für das Zuführen von Frischwasser mit der Düse (18) für das Zuführen von umgewälztem Wasser durch eine Leitung (37) verbunden ist.

7. Vorrichtung nach einem der Ansprüche 1 bis 6, **dadurch gekennzeichnet, daß** ein Temperaturfühler (16) vorgesehen ist, der mit dem Magnetventil (36) steuerungsmäßig verbunden ist, und der im Bereich des Abflusses (15) aus der Wanne (1) angeordnet ist.

8. Vorrichtung nach Anspruch 7, **dadurch gekennzeichnet, daß** eine Temperaturregelung (40) vorgesehen ist, die unter Verwertung der ihr vom Temperaturfühler (16) zugeführten Signale das Ventil (36) steuerbar macht.

9. Vorrichtung nach einem der Ansprüche 1 bis 8, **dadurch gekennzeichnet, daß** sich die Leitung (20) vom Abfluß der Wanne (1) in zwei Leitungen (20, 22) teilt, wovon eine Leitung (20) zum Abfluß und die andere Leitung (22) zur Filterpumpe (23) führt.

10. Vorrichtung nach einem der Ansprüche 1 bis 9, **dadurch gekennzeichnet, daß** die Einrichtungen (23, 25) zum Aufbereiten von Wasser in der Wanne (1) einerseits und die Einrichtungen (19, 13, 14) zum Zuführen von Frischwasser in die Wanne (1) einschließlich aller Versorgungs- und Steuerleitungen in einem neben der Wanne (1) angeordneten Technikschacht (10) untergebracht sind.

11. Vorrichtung nach einem der Ansprüche 1 bis 10, **dadurch gekennzeichnet, daß** in der Wanne (1) ein Sitz (2) vorzugsweise mit Armstützen (3) für die zu behandelnde Person vorgesehen ist.

12. Vorrichtung nach Ansprüche 1 bis 11, **dadurch gekennzeichnet, daß** eine Leiter (4) zum Einsteigen in die Wanne (1) mit wenigstens zwei Haltestangen (5) vorgesehen ist.

13. Vorrichtung nach Anspruch 10, **dadurch gekennzeichnet, daß** die Wanne (1) und der Technikschacht (10) verkleidet sind.

## Claims

1. Tank (1) for treating humans by means of fish of the type Garra rufa, including a mechanism for treating the water contained in the tank (1), comprising a filter pump (23) to which water withdrawn from the tank (1) can be supplied and a sterilising device (25) through which water can be returned to the tank after the filter pump (23), and including a mechanism for exchanging the water in the tank (1), including mechanisms (12, 15, 20) for discharging the water from the tank (1) and mechanisms (13, 14, 18) for supplying temperature-controlled fresh water into the tank (1), the mechanism (13, 14, 18) for supplying temperature-controlled fresh water into the tank (1) comprising a solenoid valve, **characterised in that** a fresh water supply can be controlled by a mechanism (16, 35, 36, 40) for maintaining the temperature of the water constant, and **in that** the mechanism (13, 14, 18) for supplying temperature-controlled fresh water into the tank (1) comprises an adjustable water mixer (35) to which cold and warm water (13, 14) is supplied as required.

2. Device according to claim 1, **characterised in that** a mechanism for sterilising water is a device (25) operating with ultraviolet rays, the operation of which can be controlled by a time-control clock (47).

3. Device according to claim 2, **characterised in that** the device operating with ultraviolet rays is a UVC filter (25).

4. Device according to one of the claims 1 to 3, **characterised in that** an adjustable air valve (27) is provided, with which air (27, 28, 29) can be mixed with the water returned to the tank (1).

5. Device according to claim 1, **characterised in that** temperature-controlled fresh water can be supplied to the tank (1) via a nozzle (19).

6. Device according to claim 5, **characterised in that** the nozzle (19) for the supply of fresh water is connected to the nozzle (18) for the supply of circulated water by means of a pipe (37).

7. Device according to one of the claims 1 to 6, **characterised in that** a temperature sensor (16) is provided which is connected to the solenoid valve (36) for control purposes and which is disposed in the region of the discharge (15) from the tank (1).

8. Device according to claim 7, **characterised in that** a temperature control unit (40) is provided which makes the valve (36) controllable by utilising the signals supplied to said temperature control unit by the temperature sensor (16).

9. Device according to one of the claims 1 to 8, **characterised in that** the pipe (20) from the discharge of the tank (1) divides into two pipes (20, 22), of which one pipe (20) leads to the discharge and the other pipe (22) leads to the filter pump (23).

10. Device according to one of the claims 1 to 9, **characterised in that** the mechanisms (23, 25) for treating the water in the tank (1) on the one hand, and the mechanisms (19, 13, 14) for supplying fresh water into the tank (1) including all the supply and control pipes are accommodated in one technical shaft (10) disposed adjacent to the tank (1).

11. Device according to one of the claims 1 to 10, **characterised in that** a seat (2), preferably with arm supports (3) for the person to be treated, is provided in the tank (1).

12. Device according to claims 1 to 11, **characterised in that** a ladder (4) for climbing into the tank (1) is provided with at least two hand poles (5).

13. Device according to claim 10, **characterised in that** the tank (1) and the technical shaft (10) are clad.

## Revendications

1. Cuve (1) pour le traitement de personnes par des poissons du type Garra Rufa, incluant un dispositif pour le traitement de l'eau contenue dans la cuve (1), comprenant une pompe à filtre (23), dans laquelle de l'eau sortie de la cuve (1) peut être amenée, et un dispositif de stérilisation (25), par lequel de l'eau peut être ramenée après la pompe à filtre (23) dans la cuve, et incluant un dispositif pour le remplacement de l'eau dans la cuve (1) comprenant des dispositifs (12, 15, 20) pour l'évacuation de l'eau de la cuve (1) et des dispositifs (13, 14, 18) pour l'arrivée d'eau fraîche à température régulée dans la cuve (1), le dispositif (13, 14, 18) comprenant une vanne magnétique pour l'arrivée d'eau fraîche à température régulée dans la cuve (1), **caractérisé en ce que** l'arrivée d'eau fraîche peut être commandée par un dispositif (16, 35, 36, 40) pour le maintien à un niveau constant de la température de l'eau, et **en ce que** le dispositif (13, 14, 18) comprend pour l'arrivée d'eau fraîche à température régulée dans la cuve (1) un mélangeur d'eau (35) réglable, auquel de l'eau froide et de l'eau chaude (13, 14) est amenée en cas d'utilisation.

2. Dispositif selon la revendication 1, **caractérisé en ce qu'**un dispositif pour la stérilisation de l'eau est un dispositif (25) travaillant avec des rayons ultraviolets, dont le fonctionnement peut être commandé par une minuterie (47).

3. Dispositif selon la revendication 2, **caractérisé en ce que** le dispositif travaillant avec des rayons ultraviolets est un filtre UVC (25).

4. Dispositif selon l'une quelconque des revendications 1 à 3, **caractérisé en ce qu'**il est prévu une vanne d'air (27) réglable avec laquelle de l'air (27, 28, 29) peut être mélangé à l'eau ramenée à la cuve (1).

5. Dispositif selon la revendication 1, **caractérisé en ce que** de l'eau fraîche tempérée peut être amenée à la cuve (1) au moyen d'une buse (19).

6. Dispositif selon la revendication 5, **caractérisé en ce que** la buse (19) pour l'arrivée d'eau fraîche est reliée à la buse (18) pour l'arrivée d'eau en circulation par une conduite (37).

7. Dispositif selon l'une quelconque des revendications 1 à 6, **caractérisé en ce qu'**une sonde de température (16) est prévue, qui est reliée à la vanne magnétique (36) au niveau de la commande et qui est disposée dans la zone de l'évacuation (15) de la cuve (1).

8. Dispositif selon la revendication 7, **caractérisé en ce qu'**il est prévu un réglage de température (40) qui rend contrôlable la vanne (36) en utilisant les signaux qui lui sont amenés par la sonde de température (16).

9. Dispositif selon l'une quelconque des revendications 1 à 8, **caractérisé en ce que** la conduite (20) se divise à partir de l'écoulement de la cuve (1) en deux conduites (20, 22), dont une conduite (20) aboutit à l'écoulement et l'autre conduite (22) à la pompe à filtre (23).

10. Dispositif selon l'une quelconque des revendications 1 à 9, **caractérisé en ce que** les dispositifs (23, 25) pour le traitement d'eau dans la cuve (1) d'une part et les dispositifs (19, 13, 14) pour l'arrivée d'eau fraîche dans la cuve (1), y compris toutes les conduites d'alimentation et de commande, sont logés dans un compartiment technique (10) disposé à côté de la cuve (1).

11. Dispositif selon l'une quelconque des revendications 1 à 10, **caractérisé en ce qu'**un siège (2), de préférence avec des accoudoirs (3), est prévu dans la cuve (1) pour la personne à traiter.

12. Dispositif selon les revendications 1 à 11, **caractérisé en ce qu'**une échelle (4) est prévue pour monter dans la cuve (1) avec au moins deux barres de retenue (5).

13. Dispositif selon la revendication 10, **caractérisé en ce que** la cuve (1) et le compartiment technique (10) sont habillés.
